Europäisches Patentamt

**European Patent Office**

**Office européen des brevets**

(11) Veröffentlichungsnummer: **0 144 659**
A2

(19)

(12) # EUROPÄISCHE PATENTANMELDUNG

(21) Anmeldenummer: **84112613.9**

(22) Anmeldetag: **19.10.84**

(51) Int. Cl.⁴: **B 01 F 5/12**

(30) Priorität: **08.11.83 DE 3340296**

(43) Veröffentlichungstag der Anmeldung:
**19.06.85 Patentblatt 85/25**

(84) Benannte Vertragsstaaten:
**AT FR GB IT NL**

(71) Anmelder: **BLUM, Albert**
**Scheiderhöhe**
**D-5204 Lohmar 1(DE)**

(72) Erfinder: **BLUM, Albert**
**Scheiderhöhe**
**D-5204 Lohmar 1(DE)**

(74) Vertreter: **Lippert, Hans-Joachim, Dipl.-Ing. et al,**
**Dipl.-Ing. W. Dahlke Dipl.-Ing. H.-J. Lippert**
**Patentanwälte Frankenforster Strasse 137**
**D-5060 Bergisch Gladbach 3(DE)**

(54) **Vorrichtung zum Rühren, Belüften und Abpumpen von Flüssigkeiten.**

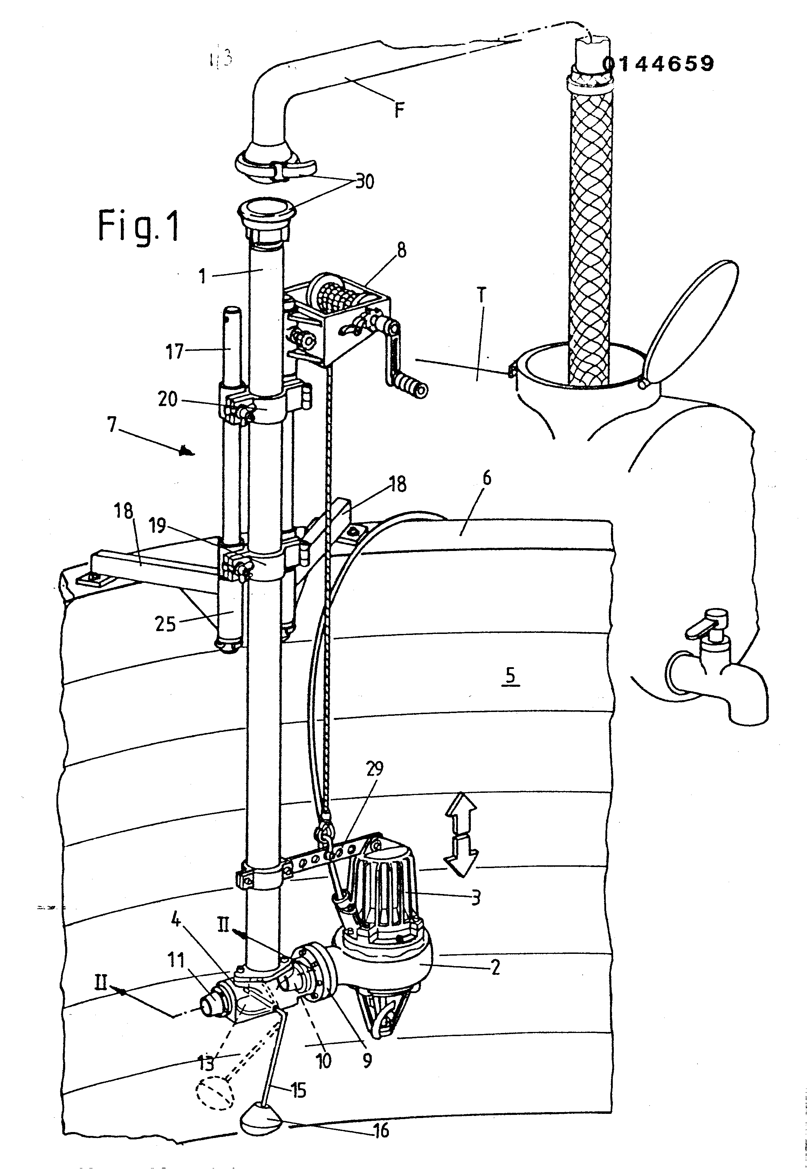

(57) Vorrichtungen zum Rühren, Belüften und Abpumpen von Flüssigkeiten bestehen aus einer Pumpe, einem Tauchmotor zum Antrieb der Pumpe, mindestens einer der Pumpe nachgeschalteten Mischkammer, mindestens einem aus der Mischkammer herausführenden Ejektor sowie einer an die Mischkammer angeschlossenen Steigleitung. Um den Gesamtkomplex des Rührens, Belüftens und Abpumpens von Flüssigkeiten vorrichtungstechnisch wesentlich zu vereinfachen, ist bei einem herkömmlichen Tauchbelüfter eine Absperreinrichtung (13) vorgesehen, mit der der Durchgang durch den Ejektor (11) während des Betriebs der Pumpe (2) wahlweise absperrbar ist, während gleichzeitig die Verbindung von der Pumpe zur Steigleitung (1) freibleibt. Durch diese Maßnahme erhält der Tauch belüfter zusätzlich zu seiner Rühr- und Belüftungsfunktion auch noch die Aufgabe des Abpumpens zugewiesen. Wenn der Durchgang durch den Ejektor (11) versperrt wird, fördert die Pumpe (2) die Flüssigkeit durch die Steigleitung (1) nach oben, durch die sonst Luft angesaugt und in der Mischkammer mit dem Flüssigkeitsstrahl vermischt wird (Fig. 1).

Fig.1

EP 0 144 659 A2

Croydon Printing Company Ltd.

Dir' . . '.V. Dahlke
Dipn.-ing. H.-J. Lippert
        Patentanwälte
Frankenforster Straße 137
5060 Berglsch Gladbach 1

18. Oktober 1984
L/Ma

.4

C144659

Albert Blum
5204 Lohmar

"Vorrichtung zum Rühren, Belüften
und Abpumpen von Flüssigkeiten"

Die Erfindung betrifft eine Vorrichtung, mit der Flüssigkeiten umgerührt und belüftet und gleichzeitig auch abgepumpt werden können.

Zum Rühren und Belüften von Flüssigkeiten sind Tauchbelüfter bekannt. Diese bestehen aus einer Pumpe, einem Tauchmotor zum Antrieb der Pumpe, mindestens einer der Pumpe nachgeschalteten Mischkammer, mindestens einem aus der Mischkammer herausführenden Ejektor sowie einer an der Mischkammer angeschlossenen Luftleitung. Wenn die Flüssigkeiten abgepumpt werden sollen, sind gesonderte Pumpeinrichtungen erforderlich.

Insbesondere bei kleinen Anlagen, beispielsweise in der Landwirtschaft bei Güllebehältern, war der Einsatz moderner Tauchbelüfter und zusätzlicher Pumpeinrichtungen bisher unrentabel. Damit die Gülle pumpfähig blieb und die Feststoffe gleichmäßig verteilt blieben, hat man bisher Rührpropeller eingesetzt. Mit diesen konnte jedoch nicht belüftet werden, so daß weiterhin das Problem der Geruchsbelästigung bestand. Das Abpumpen erfolgte dann mit kleinen Saugpumpen.

Der Erfindung liegt die Aufgabe zugrunde, den Gesamtkomplex des Rührens, Belüftens und Abpumpens von Flüssigkeiten vorrichtungstechnisch wesentlich zu vereinfachen.

Erfindungsgemäß wird diese Aufgabe dadurch gelöst, daß bei einem herkömmlichen Tauchbelüfter eine Absperreinrichtung vorgesehen wird, mit der der Durchgang durch den Ejektor während des Betriebs der Pumpe wahlweise absperrbar ist, während gleichzeitig die Verbindung von der Pumpe zur Steigleitung freibleibt.

Durch diese neue Maßnahme erhält der Tauchbelüfter zusätzlich zu seiner Rühr- und Belüftungsfunktion auch noch die Aufgabe des Abpumpens zugewiesen. Wenn nämlich der Durchgang durch den Ejektor versperrt wird, so fördert die Pumpe die Flüssigkeit durch die Steigleitung nach oben, durch die sonst Luft angesaugt und in der Mischkammer mit dem Flüssigkeitsstrahl vermischt wird.

Durch die Erfindung werden Tauchbelüfter jetzt beispielsweise auch in der Landwirtschaft rentabel, da man beispielsweise für die Bedienung eines Güllegefäßes jetzt nur noch eine einzige Vorrichtung benötigt, mit der gerührt, belüftet und abgepumpt wird. Mit der erfindungsgemäßen Vorrichtung hält man die Gülle nicht nur pumpfähig und kann sie dann bei Bedarf abpumpen, sondern durch den Belüftungseffekt kann jetzt die Geruchsbelästigung weitgehend vermieden werden.

Die Absperreinrichtung kann als schwenkbare Absperrklappe ausgebildet sein, die den Durchgang durch den Ejektor wahlweise unterbricht.

Vorzugsweise ist die Absperrklappe in der Mischkammer angeordnet und läßt sich wahlweise vor den Ejektor schwenken, um diesen zu verschließen.

Die Schwenkachse der Absperrklappe kann einen Querhebel mit einem Gegengewicht aufweisen, wobei das Gegengewicht die Absperrklappe in einer Position hält, bei der der Durchgang durch den Ejektor frei ist. Wenn die Vorrichtung also in die Flüssigkeit abgesenkt wird, so ist der Durchgang durch den Ejektor ständig frei und die Vorrichtung kann zum Rühren und Belüften verwendet werden. Wenn die Vorrichtung hin und wieder zum Abpumpen eingesetzt werden soll, muß die Klappe gezielt verschwenkt werden.

Der Querhebel mit dem Gegengewicht kann derart schräg nach unten weisen und sich nach unten über die Unterseite der Vorrichtung hinauserstrecken, daß beim Absetzen der Vorrichtung auf dem Boden bzw. einer Unterlage der Querhebel verschwenkt und die Absperrklappe dabei in die Schließstellung gebracht wird. Um die Vorrichtung zum Abpumpen umzufunktionieren, braucht diese also nur auf dem Boden bzw. einer Unterlage aufgesetzt zu werden.

Alternativ kann an der Absperrklappe auch eine Feder angreifen, die die Absperrklappe in ihrer geöffneten Stellung hält, wobei die Schwenkachse der Absperrklappe mit einem Betätigungsbügel versehen ist, der beim Absetzen der Vorrichtung auf dem Boden bzw. der Unterlage verschwenkt wird und die Absperrklappe schließt.

Schließlich ist es auch möglich, zur Betätigung der Absperrklappe ein Fernbedienungselement vorzusehen, so daß ein Abpumpen in jeder beliebigen Stellung der Vorrichtung erfolgen kann.

Die Steigleitung kann als starres, vertikal verlaufendes Rohr ausgebildet sein, dessen Länge größer als die größtmögliche Flüssigkeitstiefe ist. Dadurch ist dafür gesorgt, daß die Steigleitung, die sowohl als Luftansaugleitung als auch als Pumpenleitung dient, stets aus der Flüssigkeit herausragt und bei Bedarf mit einer Schlauchleitung verbunden werden kann.

Vorzugsweise bilden das Steigleitungsrohr, die Mischkammer, die Pumpe sowie der Motor eine zusammenhängende Baueinheit, so daß die gesamte Vorrichtung mit Hilfe des Steigleitungsrohrs in die Flüssigkeit eingetaucht, aus dieser wieder herausgeholt und auch während des Betriebs an dieser gehalten werden kann.

Zweckmäßig ist das Steigleitungsrohr in einem auf dem Behälterrand befestigbaren Haltegestell längsverschiebbar geführt, so daß es in verschiedene Tauchtiefen abgesenkt werden kann.

Das Haltegestell kann mit zwei vertikalen, in einem Abstand parallel zueinander verlaufenden Stützen versehen sein, deren untere Enden senkrecht zu den Stützen angeordnete, in einer horizontalen Ebene verschwenkbare Tragarme aufweisen, die auf dem Behälterrand befestigbar sind. Durch diese Konstruktion ist es möglich, die Vorrichtung auf dem Rand beliebig geformter Flüssigkeitsbehälter problemlos zu befestigen.

Zwischen den beiden Stützen können in vertikalem Abstand zwei zueinander fluchtende Lager zur Führung des Steigleitungsrohrs angeordnet sein, wobei sich die Lagerschalen zum Einsetzen und Herausnehmen des Steigleitungsrohrs seitlich öffnen lassen.

Ferner kann an dem Haltegestell eine Winde zum Herablassen und Heraufziehen der gesamten Baueinheit vorgesehen sein.

Am oberen Ende des Steigleitungsrohrs ist zweckmäßig eine Schnellkupplung zum problemlosen Anschluß einer Förderleitung angeordnet.

Die Erfindung ist in der Zeichnung beispielsweise veranschaulicht und im nachstenden im einzelnen anhand der Zeichnung beschrieben. Es zeigen:

Fig. 1        in perspektivischer Darstellung eine Ausführungsform einer Vorrichtung zum Rühren, Belüften und Abpumpen von Flüssigkeiten,

Fig. 2        einen Schnitt entlang der Linie II - II aus Fig. 1 und

Fig. 3        in vergrößerter Darstellung das Haltegestell aus Fig. 1.

Die Vorrichtung zum Rühren, Belüften und Abpumpen von Flüssigkeiten ist in Fig. 1 in einer Ausführungsform dargestellt, die in Verbindung mit einem Güllebehälter verwendet werden kann. Es ist klar, daß diese Vorrichtung auch zum Rühren, Belüften und Abpumpen von anderen Flüssigkeiten und in wesentlich anders geformten Behältern Anwendung finden kann.

Die Vorrichtung umfaßt als Baueinheit eine Steigleitung 1, eine Pumpe 2 mit Antriebsmotor 3 und eine Mischkammer 4. Bei der in der Zeichnung dargestellten Ausführungsform ist die Steigleitung 1 als Rohr ausgebildet, das auf dem Rand 6 eines Behälters 5 durch ein als Ganzes mit 7 bezeichnetes Haltegestell längsverschiebbar geführt ist, so daß die gesamte Baueinheit durch Verschieben der Steigleitung im Haltegestell in verschiedene Tauchtiefen abgesenkt werden kann. Dabei ist zum Herablassen und Herausziehen der gesamten Baueinheit am Haltegestell 7 eine Winde 8 vorgesehen.

Bei der in Fig. 1 dargestellten Ausführungsform kann über die Steigleitung 1 aus dem Güllebehälter 5 mittels der Vorrichtung Gülle in einen fahrbaren Gülletank T abgepumpt werden. Um ein Verstopfen der Pumpe 2, der Mischkammer 4 und der Steigleitung 2 zu verhindern, ist unterhalb der Pumpe 2 eine vom Antriebsmotor 3 angetriebene Zerkleinerungsvorrichtung für Feststoffe vorgesehen, die in der Gülle vorhanden sein können.

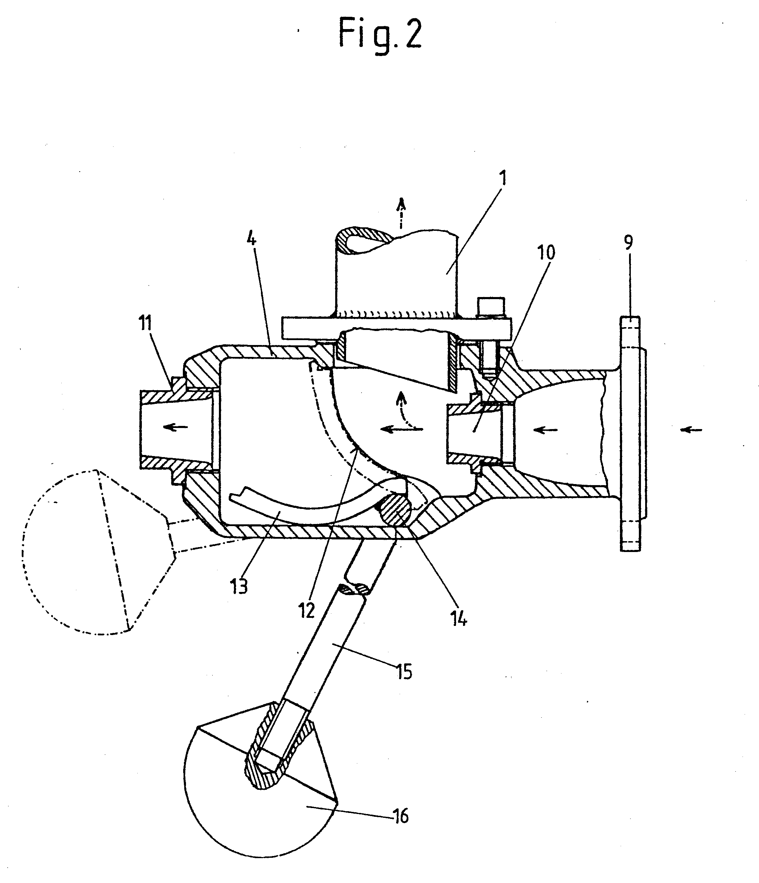

In Fig. 2 ist zur Veranschaulichung der Ausbildung ein Schnitt durch die Mischkammer 4 dargestellt. Die Mischkammer 4 ist durch eine Flanschverbindung 9 mit der Pumpe 2 verbunden. Auf der der Pumpe 2 zugewandten Seite weist die Mischkammer 4 eine Düse 10 auf, die das aus der Pumpe 2 kommende Druckwasser in Form eines Strahls durch die Mischkammer 4 hindurchführt. An der Oberseite der Mischkammer 4 ragt die als Rohr ausgebildete Steigleitung 1 in die Mischkammer hinein, so daß durch das obere offene Ende des Steigleitungsrohrs, das mit der Atmosphäre in Verbindung steht, Luft in die Mischkammer gesaugt werden kann. Am freien Ende der Mischkammer 4 ist ein Ejektor 11 angeordnet, der das mit Luftblasen durchsetzte Wasser aus der Mischkammer herausstrahlt. Zwischen dem Ejektor 11 und dem in die Mischkammer 4 hineinragenden Steigleitungsrohr 1 ist ein Ventilsitz 12 für eine als schwenkbare Absperrklappe 13 ausgebildete Absperreinrichtung vorgesehen. Durch diese Absperrklappe 13 ist der Durchgang durch den Ejektor während des Betriebs der Pumpe 2 wahlweise absperrbar. Während dieser Absperrung bleibt gleichzeitig die Verbindung von der Pumpe 2 zum Steigleitungsrohr 1 frei. Durch den Weiterbetrieb der Pumpe 2 kann bei dem in Fig. 1 dargestellten Ausführungsbeispiel Gülle aus dem Behälter 5 über das Steigleitungsrohr in einen Gülletank abgepumpt werden.

Die Schwenkachse 14 der Absperrklappe 13 weist einen Querhebel 15 auf, der ein Gegengewicht 16 trägt. Dieses Gegengewicht 16 hält die Absperrklappe 13 in einer Position, in der der Durchgang zum Ejektor 11 frei ist. Der Querhebel 15 mit dem Gegengewicht 16 weist bei geöffneter Absperreinrichtung derart schräg nach unten, daß er über die Unterseite der Vorrichtung hinausragt. Durch diese schräge Ausbildung des Querhebels 15 wird beim Absetzen der Vorrichtung auf dem Boden des Behälters 5 bzw. auf einer Unterlage der Querhebel 15 aufwärts verschwenkt und die Absperrklappe 13 dabei in die Schließstellung an den Ventilsitz 12 bewegt. Diese Stellung ist in Fig. 2 in strichpunktierten Linien dargestellt.

Um das Absetzen der Vorrichtung auf dem Boden zu ermöglichen, ist das Steigleitungsrohr 1 länger ausgebildet als die größtmögliche Flüssigkeitstiefe ist.

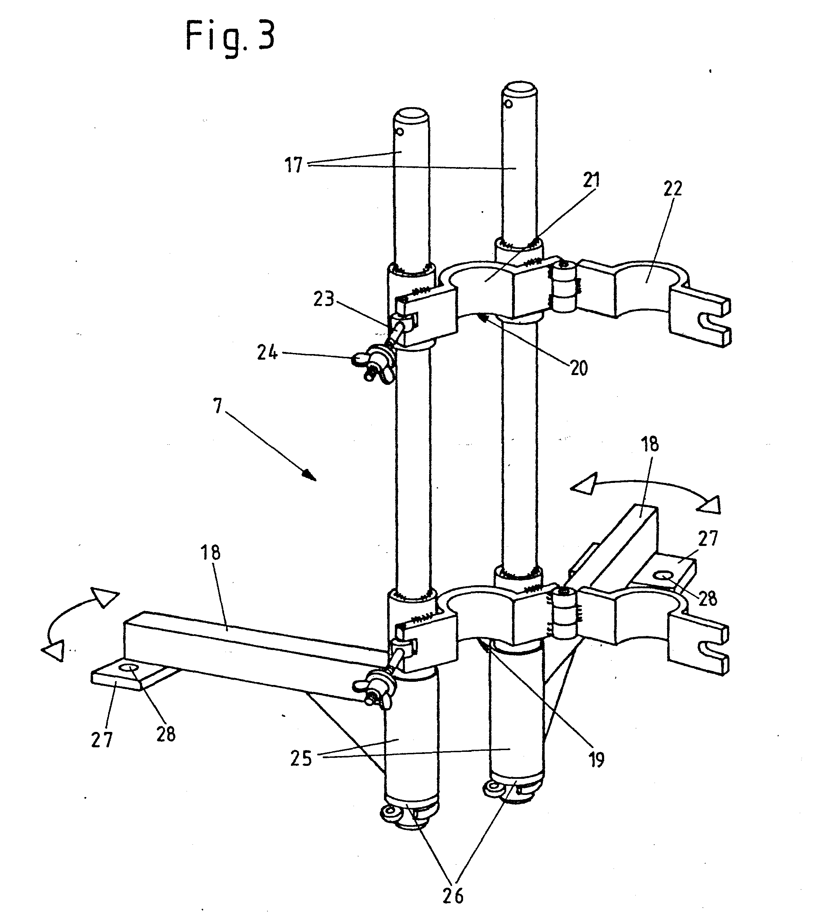

Fig. 3 der Zeichnung veranschaulicht das als Ganzes mit 7 bezeichnete Haltegestell in einem größeren Maßstab. Das Haltegestell 7 ist mit zwei vertikalen, in einem Abstand parallel zueinander verlaufenden Stützen 17 versehen. Die unteren Enden der Stützen 17 weisen in einer horizontalen Ebene verschwenkbare Tragarme 18 auf, deren freie Enden auf einem Behälterrand befestigbar sind. Die beiden Stützen 17 sind durch zwei miteinander fluchtende, in vertikalem Abstand voneinander angeordnete Lager 19 und 20 miteinander verbunden, die der Führung des Steigleitungsrohrs 1 zum Absenken und Anheben dienen. Um das seitliche Einsetzen und Herausnehmen des Steigleitungsrohrs aus den Lagern 19 und 20 zu ermöglichen, besteht jedes Lager aus zwei gegeneinander verschwenkbaren und in der zusammengeschwenkten Lage miteinander verbindbaren Lagerschalen 21, 22. Die Verbindung der freien Enden der Lagerschalen 21 und 22 miteinander erfolgt durch einen an das freie Ende der festliegenden Lagerschale 21 angelenkten Bolzen 23, der auf seinem mit Außengewinde versehenen Teil eine Flügelmutter 24 trägt.

Jeder Tragarm 18 ist durch eine starr mit diesem verbundene Lagerhülse 25 auf dem unteren Ende einer der Stützen 17 schwenkbar gelagert. Die axiale Bewegung der Lagerhülsen 25 auf den unteren Enden der Stützen 17 ist durch einen Anschlagring 26 begrenzt. Das freie Ende jedes Tragarmes 18 ist mit einem nach unten gerichteten Flansch 27 versehen, der zur Befestigung auf dem Rand 6 des Behälters 5 mit Bohrung 28 versehen ist. Da die beiden Tragarme 18 auf den Stützen 17 relativ zueinander in jede gewünschte Lage verschwenkbar sind, kann das Haltegestell 7 auf dem Rand jedes beliebig geformten Behälters befestigt werden.

Bei der in Fig. 1 dargestellten Ausführungsform ist auf das obere Ende der einen Stütze 17 eine Winde 8 aufgeschoben und befestigt. Von der Winde 8 aus erstreckt sich ein Seil abwärts und ist mit einem vom oberen Ende der Pumpe 2 zum Steigleitungsrohr 1 führenden Steg 29 verbunden. Durch Betätigen der Winde kann die gesamte Baueinheit herabgelassen und heraufgezogen werden.

Am oberen Ende des Steigleitungsrohrs 1 ist eine Schnellkupplung 30 angeordnet. Diese dient dem Anschluß einer Förderleitung F, wenn das Steigleitungsrohr 1 bei geschlossener Absperreinrichtung zum Abpumpen der im Behälter enthaltenen Flüssigkeit verwendet wird.

Dipl.-Ing. W. Dahlke
Dipl.-Ing. H.-J. Lippert
Patentanwälte
Frankenforster Straße 137
5060 Bergisch Gladbach 1

Albert Blum
5204 Lohmar

18. Oktober 1984
L/Ma

0144659

## Ansprüche

1. Vorrichtung zum Rühren, Belüften und Abpumpen von Flüssigkeiten, bestehend aus einer Pumpe, einem Tauchmotor zum Antrieb der Pumpe, mindestens einer der Pumpe nachgeschalteten Mischkammer, mindestens einem aus der Mischkammer herausführenden Ejektor sowie einer an die Mischkammer angeschlossenen Steigleitung, d a d u r c h   g e k e n n - z e i c h n e t, daß eine Absperreinrichtung vorgesehen ist, mit der der Durchgang durch den Ejektor (11) während des Betriebs der Pumpe (2) wahlweise absperrbar ist, während gleichzeitig die Verbindung von der Pumpe (2) zur Steigleitung (1) freibleibt.

2. Vorrichtung nach Anspruch 1,   d a d u r c h   g e k e n n z e i c h n e t, daß die Absperreinrichtung als schwenkbare Absperrklappe (13) ausgebildet ist.

3. Vorrichtung nach Anspruch 2,   d a d u r c h   g e - k e n n z e i c h n e t, daß die Absperrklappe (13) in der Mischkammer (4) angeordnet ist und wahlweise vor den Eingang des Ejektors (11) schwenkbar ist, um diesen zu verschließen.

4. Vorrichtung nach Anspruch 2 oder 3, d a d u r c h g e k e n n z e i c h n e t, daß die Schwenkachse (14) der Absperrklappe (13) einen Querhebel (15) mit einem Gegengewicht (16) aufweist und daß das Gegengewicht (16) die Absperrklappe (13) in einer Position hält, bei der der Durchgang durch den Ejektor (11) frei ist.

5. Vorrichtung nach Anspruch 4, d a d u r c h g e - k e n n z e i c h n e t, daß der Querhebel (15) mit dem Gegengewicht (16) derart schräg nach unten weist und sich nach unten über die Unterseite der Vorrichtung hinauserstreckt, daß beim Absetzen der Vorrichtung auf dem Boden bzw. einer Unterlage der Querhebel (15) verschwenkt und die Absperrklappe (13) dabei in die Schließstellung gebracht wird.

6. Vorrichtung nach Anspruch 2 oder 3, d a d u r c h g e k e n n z e i c h n e t, daß an der Absperr- klappe (13) eine Feder angreift, die die Absperrklappe in ihrer geöffneten Stellung hält und daß die Schwenkachse (14) der Absperrklappe (13) mit einem Betätigungsbügel versehen ist, der beim Absetzen auf dem Boden bzw. einer Unterlage verschwenkt wird und die Absperrklappe schließt.

7. Vorrichtung nach Anspruch 1 bis 3, d a d u r c h g e k e n n z e i c h n e t, daß zur Betätigung der Absperreinrichtung ein Fernbedienungselement vorgesehen ist.

8. Vorrichtung nach einem der Ansprüche 1 bis 7, d a - d u r c h g e k e n n z e i c h n e t, daß die Steigleitung (1) ein starres, vertikal verlaufendes Rohr ist, dessen Länge größer als die größtmögliche Flüssigkeitstiefe ist.

9. Vorrichtung nach Anspruch 8, d a d u r c h  g e - k e n n z e i c h n e t, daß das Steigleitungsrohr (1), die Mischkammer (4), die Pumpe (2) und der Motor (3) eine zusammenhängende Baueinheit bilden.

10. Vorrichtung nach Anspruch 8 oder 9, d a d u r c h  g e k e n n z e i c h n e t, daß das Steigleitungsrohr (1) in einem auf einem Behälterrand (6) befestigbaren Haltegestell (7) längsverschieblich geführt ist.

11. Vorrichtung nach Anspruch 10, d a d u r c h  g e - k e n n z e i c h n e t, daß das Haltegestell (7) mit zwei vertikalen, in einem Abstand parallel zueinander verlaufenden Stützen (17) versehen ist, deren untere Enden senkrecht zu den Stützen (17) angeordnete, in einer horizontalen Ebene schwenkbare Tragarme (18) aufweisen, die auf dem Behälterrand (6) befestigbar sind.

12. Vorrichtung nach Anspruch 11, d a d u r c h  g e - k e n n z e i c h n e t, daß zwischen den beiden Stützen (17) in vertikalem Abstand zwei zueinander fluchtende Lager (19, 20) zur Führung des Steigleitungsrohrs (1) angeordnet sind und daß sich die Lagerschalen (21, 22) zum Einsetzen und Herausnehmen des Steigleitungsrohrs (1) seitlich öffnen lassen.

13. Vorrichtung nach einem der Ansprüche 10 bis 12, d a d u r c h  g e k e n n z e i c h n e t, daß an dem Haltegestell (7) eine Winde (8) zum Hinablassen und Heraufziehen der gesamten Baueinheit vorgesehen ist.

14. Vorrichtung nach einem der Ansprüche 1 bis 13, d a - d u r c h  g e k e n n z e i c h n e t, daß am oberen Ende des Steigleitungsrohrs (1) eine Schnellkupplung (30) zum Anschluß einer Förderleitung (F) angeordnet ist.

Fig.1

0144659

# Fig.2

Albert Blum, Lohmar

Fig. 3

0144659

3/3

Albert Blum, Lohmar